(19) Europäisches Patentamt
European Patent Office
Office européen des brevets

(11) **EP 3 275 348 B1**

(12) **EUROPÄISCHE PATENTSCHRIFT**

(45) Veröffentlichungstag und Bekanntmachung des Hinweises auf die Patenterteilung:
**30.08.2023  Patentblatt 2023/35**

(21) Anmeldenummer: **17180811.6**

(22) Anmeldetag: **11.07.2017**

(51) Internationale Patentklassifikation (IPC):
***A47J 31/44*** *(2006.01)*

(52) Gemeinsame Patentklassifikation (CPC):
**A47J 31/4482**

(54) **GETRÄNKEAUTOMAT, INSBESONDERE KAFFEEAUTOMAT, SOWIE VERFAHREN ZUM BETRIEB EINES SOLCHEN GETRÄNKEAUTOMATEN**

DRINKS VENDING MACHINE, IN PARTICULAR COFFEE MACHINE, AND METHOD FOR OPERATING SAME

DISTRIBUTEUR DE BOISSONS, EN PARTICULIER DE CAFÉ ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2016  CH 9692016**

(43) Veröffentlichungstag der Anmeldung:
**31.01.2018  Patentblatt 2018/05**

(73) Patentinhaber: **Schaerer AG**
**4528 Zuchwil (CH)**

(72) Erfinder:
• **Frey, Florian**
**4612 Wangen bei Olten (CH)**
• **da Costa, Miguel**
**4588 Oberramsern (CH)**

(74) Vertreter: **IPrime Rentsch Kaelin AG**
**Hirschengraben 1**
**8001 Zürich (CH)**

(56) Entgegenhaltungen:
EP-A2- 3 026 404        WO-A1-2004/023949
JP-A- 2003 095 393

EP 3 275 348 B1

**Beschreibung**

**TECHNISCHES GEBIET**

Die vorliegende Erfindung bezieht sich auf das Gebiet der automatischen Zubereitung und Ausgabe von Getränken, insbesondere Kaffeegetränken. Sie betrifft einen Getränkeautomaten gemäss dem Oberbegriff des Anspruchs 1. Sie betrifft weiterhin ein Verfahren zum Betrieb eines solchen Getränkeautomaten.

**STAND DER TECHNIK**

Viele Getränkeautomaten zeichnen sich heutzutage dadurch aus, dass der Bediener unter einer Vielzahl von verschiedenen Getränken auswählen kann, die dann im Automaten zubereitet und in ein Gefäss, einen Becher, eine Tasse, oder dergleichen, ausgegeben werden. Gerade bei Kaffeeautomaten, die häufig in Verbindung mit Milch und/oder Milchschaum verschiedene Kaffeegetränke wie Cappuccino, Latte Macchiato o.ä. ausgeben können, unterscheiden sich die verschiedenen Getränke nicht nur in der Art, sondern auch in der Menge der ausgegebenen Flüssigkeit bzw. Flüssigkeiten und/oder Zusätze. Entsprechend finden auch unterschiedliche Gefässes von der kleinen Espressotasse bis zum hohen Glas oder Becher Anwendung.

Um Fehlbedienungen sicher auszuschliessen und unter allen Bedingungen eine optimale Getränkeausgabe sicherzustellen, sind in der Vergangenheit unterschiedliche Vorschläge gemacht worden, wie ein Getränkeautomat im Hinblick auf die verschiedenen Getränke, die ausgegeben werden können, aufgebaut und betrieben werden sollte.

Die Druckschrift US 4,883,100 A offenbart ein automatisches Ultraschallsystem zur Steuerung der Getränkeausgabe in unterschiedlich grosse Getränkebehälter, die auch noch unterschiedliche Mengen von Eis enthalten können. Das System umfasst eine Wandleranordnung und ein Steuermodul, die beide mit einem Getränkeausgabeventil verbunden sind. Die Wandleranordnung umfasst wenigstens zwei piezoelektrische Kristalle zum Aussenden und Empfangen von Ultraschallenergie vom Tropfgitter, vom Becherrand, von der Oberseite von im Becher befindlichem Eis und vom steigenden Flüssigkeitspegel und zur Ausgabe von Signalen, die der Laufzeit der verschiedenen Ultraschallpulse entsprechen. Das Steuermodul umfasst einen Mikroprozessor mit entsprechender Schaltung.

Die Druckschrift DE 20 48 163 A1 beschreibt eine Ausgabevorrichtung für Getränke, insbesondere bei einer Kaffeemaschine, mit einem in Abhängigkeit von der jeweils gewünschten Ausgabemenge über einen Wahlschalter elektrisch steuerbaren Dosierventil am Auslauf eines Vorratsbehälters, wobei der Wahlschalter durch eine in Abhängigkeit von wenigstens einem das jeweilige Fassungsvermögen mit dem Getränk zu füllender Auffanggefässe bestimmenden Gefässmerkmal beeinflussbare Tasteinrichtung steuerbar ist.

Die Druckschrift US 6,100,518 befasst sich mit einem Verfahren und einer Vorrichtung zur Bestimmung der Grösse eines Objektes. Das Verfahren umfasst die Reflexion von Licht am Objekt, die Messung einer Vielzahl von benachbarten Lichtintensitäten, die von einer Achse des Objekts reflektiert werden, den Vergleich benachbarter Lichtintensitäten, die Identifizierung eines Ortes, wo die Lichtintensität sich entlang der Achse merklich um einen vorgegebenen Betrag ändert, und die Bestimmung der Objektgrösse aus diesem Ort. Das Verfahren wird benutzt, um die Menge der in eine Tasse mit gemessener Höhe zu füllenden Flüssigkeit zu ermitteln.

Die Druckschrift US 6,082,246 A offenbart eine höhenverstellbare Brüheinrichtung für Tee oder Kaffee. Ein Basiselement ist vorgesehen, das eine abschaltbare Warmhalteplatte umfasst. Eine vertikale Säule umfasst zwei gleitend ineinander greifende Komponenten, die relativ zueinander vertikal verstellt werden können. Die erste dieser Komponenten ist mit dem Basiselement verbunden, die zweite mit einem Kopfelement. Das Kopfelement kann eine Einrichtung zur Aufnahme eines Trichters oder eines anderen Mechanismus zur Aufnahme von Tee oder Kaffee aufweisen. Auch kann eine Vorrichtung zur Erhitzung von Wasser oder eine einfache Verbindung zu einer Quelle von Heisswasser vorgesehen werden. Die Höhenverstellbarkeit erlaubt das Befüllen von Thermoskannen oder anderen Behältern unterschiedlicher Höhe mit Tee oder Kaffee.

Die Druckschrift DE 10 2004 050 365 A1 zeigt einen Getränkebereiter, insbesondere eine Kaffeemaschine, wobei zur Bereitung eines Getränks Wasser vorzugsweise einem Aromatauscher, und das Getränk daraus einem Auslauf über einer Trägerfläche für ein Auffanggefäss zugeführt wird, und dieser Flüssigkeitsdurchsatz von einer Steuervorrichtung gesteuert ist. Die Steuervorrichtung berücksichtigt dabei mindestens einen Kennwert des jeweils untergestellten Auffanggefässes.

Die Druckschrift DE 10 2008 029 835 A1 offenbart einen Getränkebereiter mit einer Bedien- und Steuerungseinrichtung zum Auslösen eines Getränkeausgabevorganges, einer Einheit zur Zubereitung von Getränken, welche mit einem Getränkeauslauf in fluidleitender Verbindung steht, wobei der Getränkeauslauf automatisch mittels Antriebsmotor und/oder manuell in der Höhe verstellbar ausgebildet ist und mit mindestens einer Sensoranordnung zur Erkennung des Gefäßrandes eines auf einer Stellfläche des Getränkebereiters abgestellten Gefäßes ortsfest gekoppelt ist, wobei der Getränkeauslauf in Abhängigkeit eines von der Sensoranordnung erzeugten Signals relativ zum Gefäß positionierbar ist. Der Getränkeauslauf ist an einem wenigstens annähernd oberhalb und/oder im Zentrum des Gefäßes positionierbaren Träger einer motorisch in der Höhe verstellbar ausgebildeten Tragstruktur angeordnet, und die Tragstruktur weist einen außerhalb des Gefäßes positionierbaren Träger für die Sensoranordnung auf.

Aus der Druckschrift EP 1 745 726 A1 ist eine Kaffeeautomat mit einer höhenverstellbaren und arretierbaren Auslaufeinheit bekannt, die mindestens ein mit einer Kaffeebrüheinrichtung in fluidleitender Verbindung stehendes Kaffeeauslaufrohr aufweist, gegenüber einer Tassenauflage stufenlos höhenverstellbar ist und mit einer Arretierung arretierbar ist. Die Auslaufeinheit ist mittels eines Längskugellagers als erstem Lagerelement, welches eine vertikale Längskugellagerachse als zweites Lagerelement umgreift, an dem Gehäuse gelagert, wobei eines der beiden Lagerelemente mit der Auslaufeinheit verbunden ist und das andere der beiden Lagerelemente mit einem Gehäuse des Kaffeeautomaten in fester Verbindung steht.

Die Druckschrift EP 2 599 414 B1 zeigt einen Getränkebereiter mit einem durch einen Antrieb in seiner Höhenlage verstellbaren Getränkeauslauf zur Abgabe eines Getränkes in mindestens ein Gefäß, wobei der Getränkeauslauf eine Sicherheitseinrichtung mit einem Sicherheitsschalter oder Sicherheitssensor zur Unterbrechung der Höhenverstellung des Getränkeauslaufs bei Annäherung an das Gefäß oder bei Kontakt mit dem Gefäß aufweist und zur Aktivierung des Sicherheitsschalters oder des Sicherheitssensors ein um ein Gelenk schwenkbares Stellglied und eine den Sicherheitsschalter oder Sicherheitssensor aktivierende Kontaktfläche vorhanden sind. Das Stellglied weist eine weitere Kontaktfläche zur Unterbrechung der Höhenverstellung des Getränkeauslaufs bei Erreichung einer oberen Endposition des Getränkeauslaufs auf.

Die Druckschrift EP 2 454 977 B1 offenbart einen Getränkebereiter mit einem Getränkeausgabebereich, einer Bedien- und Steuerungseinrichtung zum Auslösen eines Getränkeausgabevorganges in ein im Getränkeausgabebereich abgestelltes Gefäß, einer Einheit zur Zubereitung von Getränken, welche mit einem Getränkeauslauf in fluidleitender Verbindung steht, wobei der Getränkeauslauf mittels Antriebsmotor im Getränkeausgabebereich in der Höhe verstellbar ausgebildet ist und in Abhängigkeit eines von einer Sensoranordnung erzeugten Signals relativ zum Gefäßrand positionierbar ist und wobei die Sensoranordnung an einer mit dem Getränkeauslauf verbundenen Tragstruktur angeordnet ist und die Lage des Gefäßrandes während einer mit der Höhenverstellung des Getränkeauslaufs gekoppelten Bewegung erfasst. Die Tragstruktur ist derart mit dem Getränkeauslauf mechanisch gekoppelt, dass die Sensoranordnung hinter einer den Getränkeausgabebereich mindestens teilweise begrenzenden Wand bewegbar angeordnet ist, wobei die Wand in mindestens einem Abschnitt signaldurchlässig ausgebildet ist.

Die EP 2 716 189 B1 offenbart einen Getränkeautomaten mit einer automatisch in der Höhe verstellbaren Ausgabeeinheit, unter der wenigstens ein zur Befüllung mit einem in dem Getränkeautomaten erzeugten Getränk geeignetes Gefäß abstellbar ist. Der Getränkeautomat weist eine Druckluftausgabeeinrichtung zur gerichteten Abgabe eines mittels einer Drucklufterzeugungsvorrichtung erzeugten Luftstrahls auf, wobei der Druck des Luftstrahls größer als der Umgebungsluftdruck ist und korrespondierend zu der Druckluftausgabeeinrichtung mindestens ein Messwertaufnehmer zur Erfassung einer während des Absenkens der Ausgabeeinheit von dem Luftstrahl erzeugten physikalischen Größe vorhanden ist.

Die Druckschrift JPH 03114799 U befasst sich mit einer Vorrichtung zum Einfüllen von Bier in ein unter einem Zapfhahn stehendes Gefäss bzw. Glas. Der Zapfhahn einschliesslich der steuerbaren Bedienungsautomatik ist mit einem motorischen Antrieb gegenüber dem Gefäss höhenverstellbar. Am Zapfhahnträger ist etwas unterhalb des Zapfhahnes eine Lichtschranke angeordnet, mit das Erreichen des Gefässrandes detektiert wird, wenn der Zapfhahn vor der Getränkeausgabe über dem Gefäss nach untern verfahren wird.

Die Druckschrift WO 2004023949 A beschreibt eine Abgabevorrichtung für Getränke oder dergleichen dosierbare fluide Lebensmittel, insbesondere Kaffee, Milch, Softdrinks oder Suppen. Die Abgabevorrichtung umfasst eine Erkennungseinrichtung zum Erkennen einer vertikalen Höhe eines Geschirrs zur Aufnahme des Lebensmittels und zum Abgeben eines Höhensignals, eine Fülleinrichtung, die in ihrer Höhe relativ zum Geschirr verstellbar angeordnet ist, und eine Steuereinrichtung, die auf das Höhensignal hin die Fülleinrichtung in eine voreinstellbare Füllhöhe zum Geschirr verstellt, bevor das Lebensmittel in das Geschirr gefüllt wird.

Die letztgenannte Lösung hat den Nachteil, dass die Annäherung der Abgabevorrichtung an das Gefäss nicht überwacht wird, sondern nach Massgabe einer fest vorgegebenen Position erfolgt. Dies kann beispielsweise zu Kollisionen führen, wenn während des Verfahrvorgangs das unter die Abgabevorrichtung gestellte Gefäss gewechselt wird.

Die anderen bekannten Lösungen, bei denen der Verfahrvorgang vom Abtasten des Gefässrandes gesteuert und bei Erreichen des Randes unterbrochen wird, wie z.B. bei der JPH 031 14799 U oder der DE 10 2008 029 835 A1 oder bei der EP 2 454 977 B1, sind konstruktiv vergleichsweise aufwändig und störanfällig. Die Druckschrift JP 2003 095393 A offenbart einen Getränkeautomat gemäss Oberbegriff des Anspruchs 1.

## DARSTELLUNG DER ERFINDUNG

Es ist daher eine Aufgabe der Erfindung, einen Getränkeautomaten und ein Verfahren zu dessen Betrieb anzugeben, welche bestimmte Nachteile des Standes der Technik vermeiden und sich durch einen einfachen und funktionssicheren Aufbau auszeichnen und in hohem Masse sicher gegen eine Fehlbedienung sind.

Die Aufgabe wird durch die Merkmale der Ansprüche 1 und 12 gelöst. Der Getränkeautomat der Erfindung, insbesondere ein Kaffeeautomat, umfasst eine Getränkezubereitungseinrichtung, die fluidtechnisch mit einer Auslaufvorrichtung verbunden ist, welche oberhalb einer Standfläche für ein das zubereitete Getränk auffangendes Gefäss angeordnet ist, sowie einen über eine Steuerung steuerbaren Antrieb, mittels dessen Auslaufvorrichtung und Standfläche relativ zueinander in der Höhe verfahrbar sind. Er ist dadurch gekennzeichnet, dass ein Höhensensor vorgesehen ist, welcher die Höhendifferenz zwischen der Oberkante eines auf der Standfläche abgestellten Gefässes und der Auslaufvorrichtung misst und ein entsprechendes Signal zur Steuerung des Antriebs der Auslaufvorrichtung und/oder der Standfläche abgibt.

Hierbei kommt es wegen der gemessenen Höhendifferenz nur auf die relative Bewegung zwischen Auslaufvorrichtung und Standfläche an. Eine solche relative Bewegung kann dadurch erreicht werden, dass die Auslaufvorrichtung verfahrbar ausgebildet ist, während die Standfläche ortsfest bleibt. In diesem Fall ist die Steuerung des Antriebs eine Auslaufsteuerung. Selbstverständlich kann im Rahmen der Erfindung auch eine höhenverfahrbare Standfläche vorgesehen werden, wie dies beispielsweise aus der Druckschrift EP 2 478 805 A2 bekannt ist, während die Auslaufvorrichtung ortsfest ausgebildet ist. Auch ist es möglich, sowohl Auslaufvorrichtung als auch Standfläche verfahrbar auszubilden.

Die Höhendifferenz kann je nach Art des Höhensensors auf unterschiedliche Weise gemessen bzw. bestimmt werden. So kann beispielsweise im Durchlicht zwischen Auslaufvorrichtung und Gefäss die Abschattung optisch gemessen und daraus die jeweilige Stellung der Auslaufvorrichtung zum Gefäss ermittelt werden.

Möglich sind aber auch reflektive Abtastverfahren, die auf Ultraschall, Laserlicht oder Infrarot basieren. Der Höhensensor ist ortsfest an dem Getränkeautomaten angebracht und mit einer geeigneten Auswerteeinheit verbunden.

Gemäss der Erfindung ist der Höhensensor ein sich in vertikaler Richtung erstreckender linearer Sensor.

Insbesondere kann der Höhensensor ein in vertikaler Richtung segmentierter Sensor sein. Es ist aber auch denkbar, dass der Höhensensor eine Mehrzahl von in vertikaler Richtung hintereinander angeordneten einzelnen Sensorelementen umfasst. Ein solcher Sensor kann aus Standardelementen (Einzelsensoren) als Baugruppe zusammengebaut und den Verhältnissen am Getränkeautomaten entsprechend konfiguriert werden.

Gemäss einer Weiterbildung dieser Lösung können die Sensorelemente jeweils eine Bestimmung des Abstands zwischen dem Sensorelement und der Wand des Gefässes ermöglichen. Ändert sich der Abstand Sensor-Wand aufgrund der Formgebung des Gefässes von Sensor zu Sensor, kann so ein Höhenverlauf der Gefässkontur ermittelt und zur Abschätzung des äusseren und damit auch des inneren Volumens des Gefässes herangezogen werden. Hierdurch lässt sich vorteilhaft zusätzlich die Füllmenge des Gefässes steuern. Insbesondere können die Sensorelemente Time-Of-Flight(TOF)-Sensoren sein. Mit diesen Sensoren kann die Laufzeit eins ausgesendeten und zum Sender zurückreflektierten Signals bestimmt und daraus die Entfernung zwischen Sender und Reflexionsort abgeleitet werden.

Eine andere Ausgestaltung der Erfindung ist dadurch gekennzeichnet, dass der Getränkeautomat eine zentrale Kontrolleinheit aufweist, dass die Steuerung mit der Kontrolleinheit verbunden ist, und dass der Höhensensor an die Kontrolleinheit angeschlossen ist.

Die zentrale Kontrolleinheit verarbeitet die Sensorsignale und gibt Befehle zum Verfahren an die Steuerung der Auslaufvorrichtung weiter. Sie steuert und überwacht den gesamten Ablauf des Prozesses der Getränkezubereitung und -ausgabe. Insbesondere ist sie ein elementarer Bestandteil der Regelschleife, welche durch Vergleich zwischen Sollwert und Istwert der Höhendifferenz die kollisionfreie Annäherung der verfahrbaren Auslaufvorrichtung an den oberen Rand des unterstehenden Gefässes bewirkt. Selbst wenn der Fall eintritt, dass der Benutzer des Getränkeautomaten während des Annäherungsvorgangs das Gefäss gegen ein anderes mit grösserer Gefässhöhe austauscht oder das Gefäss auf eine Unterlage setzt, wird aufgrund der Regelung und fortlaufenden Überwachung der Höhendifferenz diese Änderung der Konfiguration erkannt und entsprechend darauf reagiert.

Zur vereinfachten Bedienung kann als graphische Benutzer-Schnittstelle (GUI) eine Bedien- und Anzeigeeinheit für den Getränkeautomaten vorgesehen sein, wobei die Bedien- und Anzeigeeinheit mit der Kontrolleinheit verbunden ist.

Insbesondere kann die Bedien- und Anzeigeeinheit zur Darstellung eines Getränkemenüs aus verschiedenen auswählbaren Getränken ausgebildet sein. Der Benutzer hat so die Möglichkeit einfach und direkt einen bestimmten Getränkewunsch einzugeben, der dann in Relation zum untergestellten Gefäss auf Machbarkeit geprüft werden kann. Es ist aber auch denkbar, nach einer Bestimmung des untergestellten Gefässes die Menüauswahl entsprechend einzuschränken.

Eine weitere Ausgestaltung der Erfindung ist dadurch gekennzeichnet, dass zusätzlich zum Höhensensor wenigstens ein Formsensor vorgesehen ist, welcher zum Abtasten der äusseren Form des Gefässes geeignet und mit einer Kontrolleinheit des Getränkeautomaten verbunden ist. Da die Gefässe (Tassen, Becher etc.) bauchige oder schmale, runde oder eckige Formen aufweisen können, ist über die Gefässhöhe hinaus mittels der Formerkennung eine verbesserte Abschätzung des Inhaltsvolumens möglich, die dann einerseits in die Menüauswahl einfliessen kann und andererseits zur Verhinderung von Überlaufvorgängen eingesetzt werden kann.

Der wenigstens eine Formsensor kann als horizontaler Sensor ausgebildet sein, der ähnlich wie die Höhensensoren aufgebaut ist. Es ist aber auch denkbar, als horizontalen Formsensor ein Abtastelement einzusetzen, das mittels zwei in horizontaler Richtung spreizbaren Fühlern (ähnlich einer Gabel) die Gefässbreite abtastet.

Besonders einfach lässt sich eine solche Formerkennung realisieren, wenn der wenigstens eine Formsensor aus einer Mehrzahl von in vertikaler Richtung hintereinander angeordneten Time-Of-Flight(TOF)-Sensoren zusammengesetzt ist. Um unsymmetrische und anderweitig abweichende oder ungewöhnliche Gefässformen besser zu erkennen und auf unterschiedliche Positionen des untergestellten Gefässes auf der Standfläche reagieren zu können, ist es von Vorteil, wenn das Gefäss von verschiedenen Seiten mit Formsensoren abgetastet wird. Hierzu können mehrere Formsensoren um die Stellfläche für das Gefäss herum angeordnet sein. Wenn der Höhensensor ebenfalls mit TOF-Sensoren bestückt ist, reichen zwei weitere Formsensoren, die jeweils um 90° voneinander entfernt angeordnet sind.

Das erfindungsgemäss Verfahren zum Betrieb eines Getränkeautomaten nach der Erfindung dadurch gekennzeichnet, dass vor dem Ausgeben eines Getränks die Höhendifferenz zwischen der Oberkante eines auf der Standfläche abgestellten Gefässes und der Auslaufvorrichtung gemessen wird, und dass die Auslaufvorrichtung und das Gefäss relativ zueinander in Richtung aufeinander zu verfahren werden, wenn die Höhendifferenz grösser als ein vorgegebenes Minimum der Höhendifferenz und gestoppt werden, wenn die Höhendifferenz gleich dem vorgegebenen Minimum der Höhendifferenz ist. Die Auslaufvorrichtung reagiert auf dieses Weise konkret auf das darunter stehende Gefäss und kann so in allen Situationen ein Kollision mit dem Gefäss sicher vermeiden.

Dazu kann die Höhendifferenz bis zum Erreichen des Minimums der Höhendifferenz fortlaufend gemessen werden. Die fortlaufende Messung schliesst sowohl kontinuierliche als auch in periodischen Abständen vorgenommene Messungen ein.

Weil, beispielsweise im Zusammenhang mit Getränken, die teilweise aus Schaum bestehen (z.B. Cappuccino), bei gleichem Gefäss unterschiedliche Getränke mit unterschiedlichen Minimalhöhen korreliert sein können, ist es denkbar, dass das vorgegebene Minimum der Höhendifferenz von der Art des auszugebenden Getränks abhängt.

Auch kann die Art des auszugebenden Getränks vom Bediener des Getränkeautomaten durch Auswahl eines Menüpunktes aus einer Mehrzahl von Menüpunkten auf einer Bedien- und Anzeigeeinheit festgelegt werden.

In diesem Zusammenhang ist es denkbar, dass zusätzlich die Höhe des Gefässes gemessen wird, und dass Art und Anzahl der auswählbaren bzw. ausgewählten Menüpunkte durch die gemessene Höhe des Gefässes beeinflusst wird.

Weiterhin ist es denkbar, dass zusätzlich die äussere Form des Gefässes gemessen wird, dass aus der gemessenen Höhe und/oder der äusseren Form des Gefässes das Inhaltsvolumen des Gefässes abgeschätzt wird, und dass die in das Gefäss abgegebene Menge des ausgewählten Getränks sich nach dem abgeschätzten Inhaltsvolumen richtet.

## KURZE ERLÄUTERUNG DER FIGUREN

Die Erfindung soll nachfolgend anhand von Ausführungsbeispielen im Zusammenhang mit der Zeichnung näher erläutert werden. Es zeigen:

Fig. 1 in einem vereinfachten Blockschema ein erstes Ausführungsbeispiel für einen Getränkeautomaten nach der Erfindung mit einem vertikalen linearen Höhensensor zur Bestimmung relevanter Höhen bzw. Höhendifferenzen;

Fig. 2 in einem vereinfachten Blockschema ein zweites Ausführungsbeispiel für einen Getränkeautomaten nach der Erfindung, der gegenüber dem Ausführungsbeispiel der Fig. 1 um zusätzliche, verteilt angeordnete Formsensoren zur genaueren Bestimmung der Form eines zu füllenden Gefässes bzw. Gefässes erweitert ist;

Fig. 3 verschiedene Schritte innerhalb eines Ausführungsbeispiels des erfindungsgemässen Verfahrens;

Fig. 4 ein von der Schrittfolge der Fig. 3 abweichendes Verfahren gemäss einem weiteren Ausführungsbeispiel der Erfindung;

Fig. 5 eine beispielhafte Menüanzeige innerhalb eines Getränkeautomaten nach der Erfindung;

Fig. 6 eine weitere beispielhafte Menüanzeige innerhalb eines Getränkeautomaten nach der Erfindung;

Fig. 7 einen Ausschnitt aus einem weiteren Ausführungsbeispiel für einen Getränkeautomaten nach der Erfindung, bei welchem die Bestimmung der Höhen über einen lineare Reihe von TOF-Sensoren erfolgt; und

Fig. 8 die Auslaufsteuerung mittels der linearen Reihe von TOF-Sensoren gemäss Fig. 7.

**WEGE ZUR AUSFÜHRUNG DER ERFINDUNG**

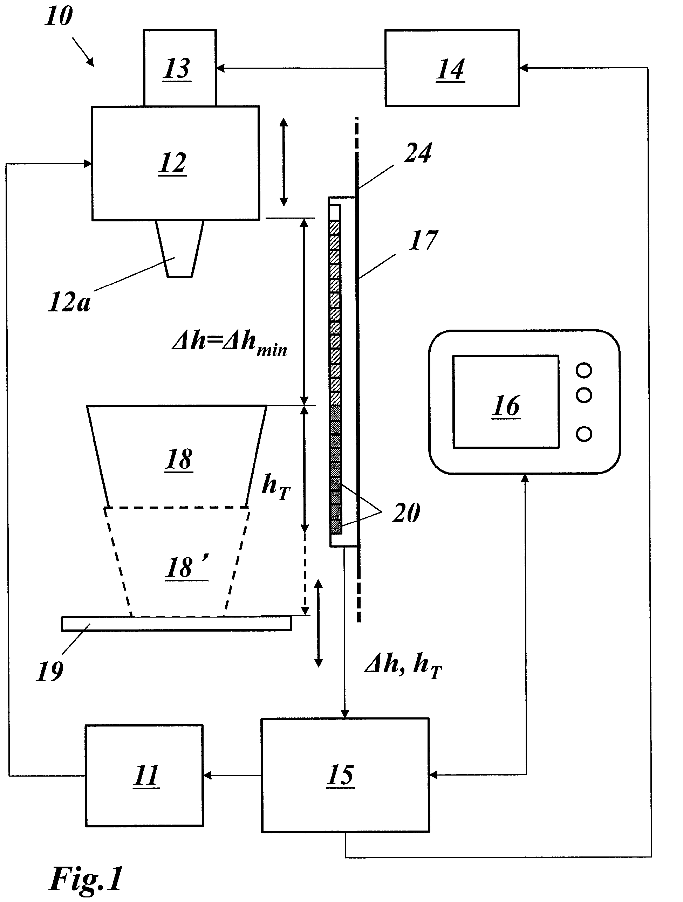

Fig. 1 zeigt in einem vereinfachten Blockschema ein erstes Ausführungsbeispiel für einen Getränkeautomaten nach der Erfindung mit einem vertikalen linearen Höhensensor zur Bestimmung relevanter Höhen bzw. Höhendifferenzen. Der Getränkeautomat 10 der Fig. 1 umfasst eine Getränkezubereitungseinrichtung 11, in welcher das auszugebende Getränk zubereitet wird. Handelst es sich bei dem Getränkeautomaten 10 um einen Kaffeeautomaten, wird in der Getränkezubereitungseinrichtung 11 das Kaffeegetränk zubereitet, indem beispielsweise Kaffeebohnen gemahlen, der gemahlene Kaffee einer Brüheinheit zugeführt und durch die Brüheinheit heisses Wasser unter Druck hindurchgepresst wird. Das Kaffeegetränk kann aber auch aus in Kapseln vorgehaltenem Kaffeepulver oder aus löslichem Kaffeepulver durch Aufgiessen mit heissem Wasser zubereitet werden. Andere Arten von Getränkeautomaten für Heiss- oder Kaltgetränke wie z.B. Suppen oder Limonaden sind ebenfalls denkbar.

Der Ausgang der Getränkezubereitungseinrichtung 11 steht in fluidischer Verbindung mit einer Auslaufvorrichtung 12, die in der Höhe verfahrbar über einer Standfläche 19 angeordnet ist. Auf der Standfläche 19 kann ein Gefäss 18 bzw. 18', insbesondere eine Tasse oder ein Becher unterschiedlicher Grösse, d.h. unterschiedlicher Höhe und/oder unterschiedlichen Inhaltsvolumens, unter der Auslaufvorrichtung 12 abgestellt werden, um bei der Getränkeabgabe durch die Auslaufvorrichtung 12 über einen Auslass 12a mit dem zubereiteten Getränk gefüllt zu werden.

Die Auslaufvorrichtung 12 ist mittels eines motorischen Antriebs 13, z.B. über eine motorisch angetriebene, drehende, vertikale Gewindestange oder eine Zahnstangen-Ritzel-Kombination oder einen Kettenantrieb, in vertikaler Richtung verfahrbar (siehe den zugehörigen Doppelpfeil). Zu dem motorischen Antrieb 13 gehört eine Auslaufsteuerung 14, welche die für das Verfahren notwendigen Signale und Impulse entsprechender Leistung an den Antrieb 13 abgibt. Die Auslaufsteuerung 14 ihrerseits erhält die notwendigen Befehle und Steuergrössen aus einer zentralen Kontrolleinheit 15, die mit entsprechender Intelligenz und Rechenkapazität ausgestattet ist, um den Prozess der Getränkezubereitung und -ausgabe zu steuern und zu regeln.

Die Kontrolleinheit 15 steht mit einer Bedien- und Anzeigeeinheit (Graphic User Interface GUI) 16 in Verbindung, über die, z.B. über Tasten oder ein berührungsempfindliches Display, Befehle, welche die Auswahl eines Getränkes oder andere steuerungsrelevante Grössen betreffen, eingegeben und Ergebnisse der Maschinentätigkeit angezeigt werden können.

Die Kontrolleinheit 15 wird nicht nur über (nicht dargestellte) Sensoren mit Werten von Temperatur, Druck, Durchfluss, Füllständen etc. aus der Maschine versorgt, die dann im Rahmen der Prozesssteuerung verwertet werden. Sie ist auch mit einem Höhensensor 17 verbunden, der geeignet ist, im Bereich der Getränkeausgabe verschiedene Höhen h zu messen und die entsprechenden Messwerte an die Kontrolleinheit 15 weiterzugeben.

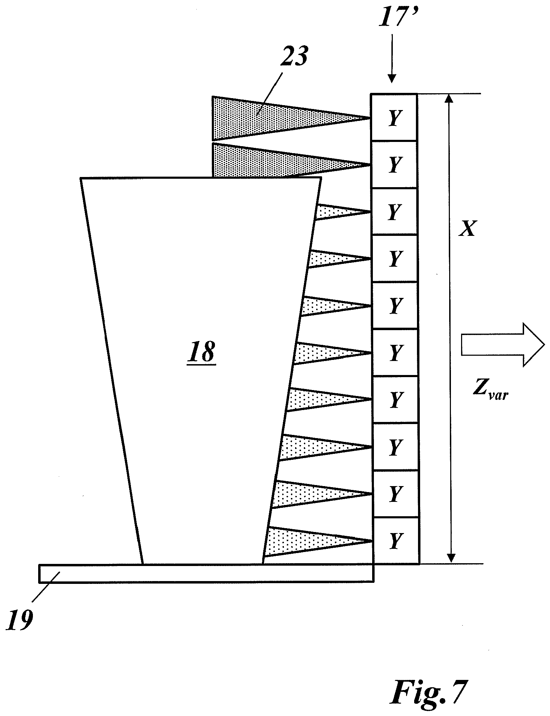

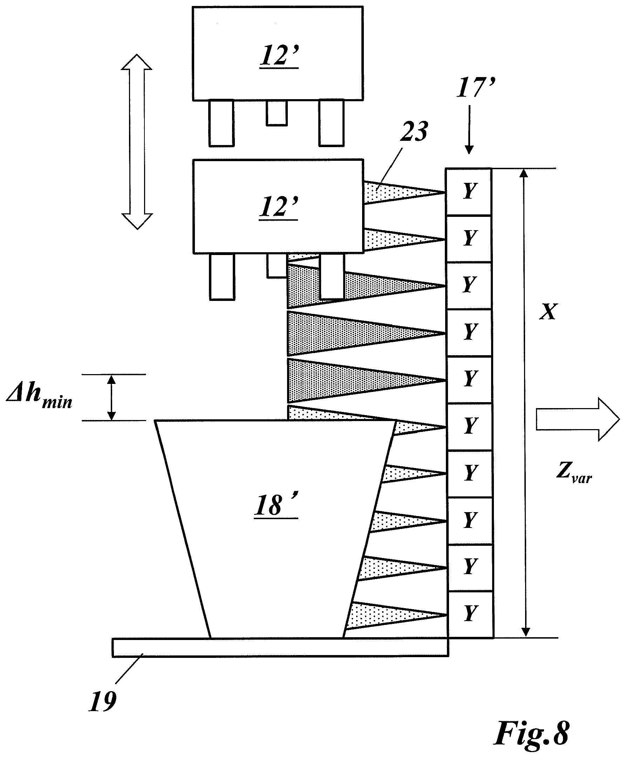

Im Ausführungsbeispiel der Fig. 1 ist der Höhensensor 17 ein vertikaler linearer Sensor, bei dem eine Vielzahl von einzelnen Sensorelementen 20 in einer Reihe hintereinander angeordnet ist. Der Höhensensor 17 kann direkt aussen auf der dem Auslauf 12 und Gefäss 18 bzw. 18' zugewandten Wand 24 der Maschine angeordnet sein. Er kann aber auch zum besseren Schutz vor Spritzern, Dampf und anderen negativen Umwelteinflüssen hinter der Wand 24 angeordnet werden und durch eine entsprechende, z.B. schlitzförmige oder gitterartige, Öffnung Zugang zu der Messregion zwischen Gefäss 18, 18' und Auslauf haben. Im Ausführungsbeispiel der Fig. 1 hat der Höhensensor 17 eine solche Längenausdehnung, dass er einerseits bis zu der in einer oberen Ruhe- oder Ausgangsposition gezeigten Auslaufvorrichtung 12 reicht, und andererseits über den oberen Rand aller möglicher Gefässgrössen (18, 18') hinaus nach unten reicht. Im Extremfall kann er sogar - wie in den Fig. 7 und 8 gezeigt -bis hinunter zur Standfläche 19 reichen.

Der Höhensensor 17 kann nun in dieser Ausgestaltung mindestens zweierlei Aufgaben übernehmen: (1) Zum einen kann er die Höhe $h_T$ des Gefässes 18, 18' von der Standfläche 19 bis zum oberen Rand bestimmen (Tassenhöhe). Wenn er nicht bis zur Standfläche 19 hinunter reicht, kann eine entsprechende feste Länge hinzuaddiert werden. (2) Zum anderen kann er beim Verfahren der Auslaufvorrichtung 12 (z.B. fortlaufend) den Abstand $\Delta h$ zwischen der Auslaufvorrichtung 12 und der Oberkante des Gefässes 18, 18' (Höhendifferenz) messen und dem Regelungsprozess für das Verfahren der Auslaufvorrichtung 12 als Istgrösse zuführen. Hierdurch ist es möglich, die Auslaufvorrichtung 12 bis zu einer vorgewählten Minimalhöhe $\Delta h_{min}$ auf das Gefäss 18, 18' abzusenken, ohne dass es zu einer Kollision zwischen Auslaufvorrichtung 12 und Gefäss 18, 18' kommt. Dies kann insbesondere dann von entscheidender Bedeutung sein, wenn der Bediener des Automaten während des Verfahrprozesses das auf der Standfläche 19 bereits abgestellte Gefäss gegen ein anderes grösserer Höhe auswechselt.

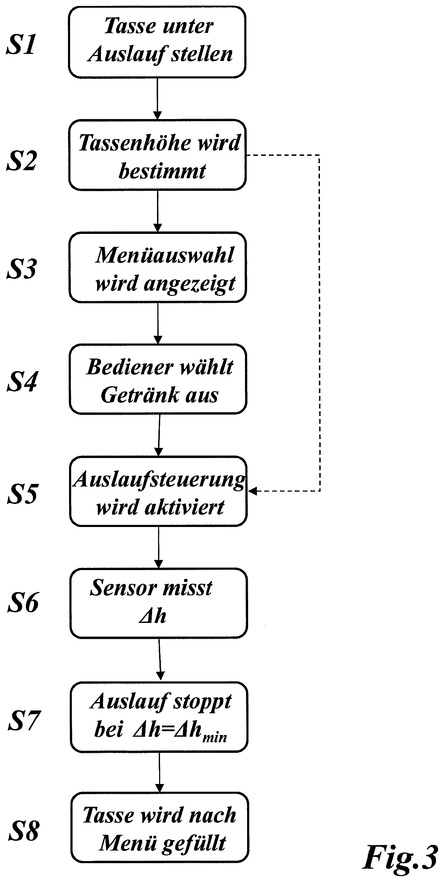

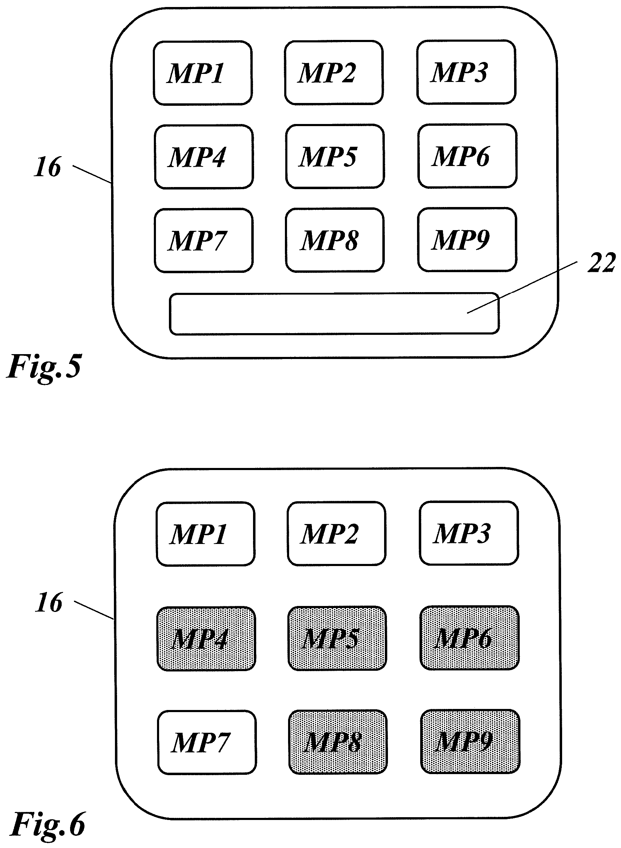

Ein mit dem Getränkeautomaten 10 gemäss Fig. 1 ausführbarer beispielhafter Prozess mit den Schritten S1 bis S8 ist in Fig. 3 widergegeben. Innerhalb dieses Prozesses wird in einem ersten Schritt S1 ein Gefäss (eine Tasse) auf die Standfläche 19 unter den Auslauf (die Auslaufvorrichtung 12) gestellt. Sobald die Tasse steht, wird mittels des Höhensensors 17 in der Kontrolleinheit 15 die Tassenhöhe $h_T$ bestimmt (Schritt S2). Da die Tassenhöhe $h_T$ zu dem später auszuwählenden Getränk in einer bestimmten Beziehung steht und passen muss, kann anhand der gemessenen Tassenhöhe $h_T$ eine Menüauswahl von passenden Getränken bestimmt und auf der Bedien- und Anzeigeeinheit (GUI) 16 dem Benutzer angezeigt werden (Schritt S3). Dies ist in der Darstellung der Fig. 6 dadurch deutlich gemacht, dass von allen möglichen Menüpunkten MP1 bis MP9 die grau hinterlegten Menüpunkte MP4 bis MP6 und MP8 sowie MP9 nicht angezeigt oder als nicht zur Tassenhöhe $h_T$ passende Menüpunkte markiert werden.

Aus den übrig bleibenden (aktiven) Menüpunkten MP1 bis MP3 und MP7 wählt der Benutzer/Bediener nun ein Getränk per Fingerdruck aus (Schritt S4). Ist dies geschehen, wird von der Kontrolleinheit 15 die Auslaufsteuerung 14 aktiviert (Schritt S5), die über den Antrieb 13 die Auslaufvorrichtung 12 aus der oberen Ruhestellung soweit nach unten auf das Gefäss zu absenkt, bis die vom Höhensensor 17 gemessene Höhendifferenz $\Delta h$ (Schritt 56) gleich der für dieses Getränk vorgesehenen minimalen Höhendifferenz $\Delta h_{min}$ ist (Schritt S7). ist diese Endstellung der Auslaufvorrichtung 12 erreicht, wird über den Auslass 12a das während des Verfahrens oder unmittelbar nach dem Verfahren der Auslaufvorrichtung 12 zubereitete Getränk in das Gefäss 18, 18' ausgegeben (Schritt S8).

Es ist aber auch denkbar, dass nach der Bestimmung der Tassenhöhe hr die Auslaufsteuerung 14 ohne Umweg über die bzw. ohne Abhängigkeit von der Vornahme der Menüauswahl direkt aktiviert und der Absenkungsprozess durchgeführt wird (gestrichelter Pfeil in Fig. 3). Hierdurch kann die Getränkeausgabe beschleunigt werden. In jedem Fall wird das Absenken jedoch als geregelter Prozess unter Einbeziehung des Höhensensors 17 durchgeführt.

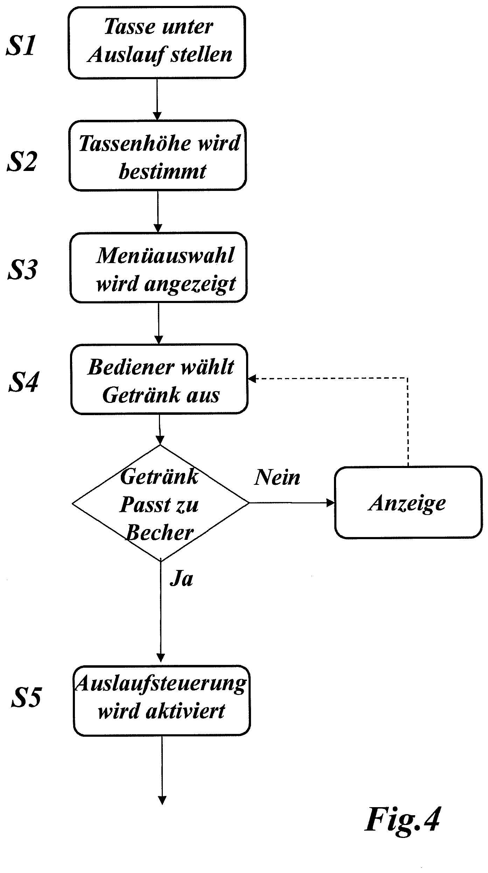

Es ist aber auch denkbar, gemäss Fig. 4 und Fig. 5 im Schritt 3 immer die volle Menüauswahl (alle Menüpunkte MP1 bis MP9) als wählbar anzuzeigen und nach der Auswahl eines Getränks (Schritt 4) dem Benutzer/Bediener anzuzeigen, ob diese Getränkeauswahl zur gemessenen Tassenhöhe $h_T$ passt, oder nicht. Passt das ausgewählte Getränk nicht, kann dies dem Benutzer über eine Textanzeige 22 mitgeteilt werden, z.B. mit der Aufforderung, eine neue Auswahl zu treffen oder das Gefäss zu wechseln. Passen ausgewähltes Getränk und gemessene Tassenhöhe $h_T$ zusammen, geht der Prozess weiter mit Schritt S5.

Besonders vorteilhaft ist die hier vorgestellte Lösung, wenn gemäss Fig. 7 und 8 als Höhensensor 17' ein vertikales $(1 \times n)$-Array von Time-Of-Flight(TOF)-Sensoren Y eingesetzt wird. Der einzelne TOF-Sensor Y misst dabei beim Aussenden eines Sensorstrahls 23 die Laufzeit zwischen der Emission am Sender und dem Empfang des von einem ggf. vorhandenen Objekt zurückgestrahlten Signals. Dabei ist der Tiefenbereich, in dem zurückgestrahlte Signale erkennbar sind, einstellbar. Die Anzahl n der TOF-Sensoren Y bewegt sich dabei typischerweise im Bereich 3-10, abhängig vom gewünschten zu erfassenden Höhenbereich des Gefässes 18, 18' sowie der in diesem Bereich zu erzielenden Höhenauflösung.

Folgende Informationen können aus den TOF-Sensoren Y gewonnen werden:

- Hindernis vorhanden

- Distanz zum Hindernis

- Umgebungslichtstärke

Zur Höhenerfassung genügt ein Array $(1 \times n)$ (siehe Fig. 1, 7 und 8). Durch die bekannte vertikale Distanz der TOF-Sensoren Y kann aus der Anzahl der Sensoren mit Signal eine Aussage über die Höhe eines sich im Messbereich des Sensors befindlichen Objekts gemacht werden.

Dazu werden folgende Variablen definiert:

X: Totale Höhe der Gesamtheit aller TOF-Sensoren Y (gegeben durch Baugruppenlayout von auf einer Platine hintereinander angeordneten Einzelsensoren)

Y: TOF-Sensor

$Z_{var}$: variables Sensorsignal (max. Sensorsignal $Z_{var,max}$ entspricht der Höhe X)

$Y_A$: Anzahl n verbauter TOF-Sensoren Y

$Y_B$: (heller Sensorstrahl 23 in Fig. 7,8): Anzahl der TOF-Sensoren Y, welche ein Hindernis erkennen ($Y_B = Y_A \triangleq Z_{var,max}$)

$Y_C$: (dunkler Sensorstrahl 23 in Fig. 7,8): Anzahl der TOF-Sensoren Y, welche kein Hindernis erkennen ($Y_C = Y_A \triangleq Z_{var,min}$)

Aufgrund der Gesamthöhe X aller Sensoren Y (gegeben durch Baugruppenlayout) und der Anzahl Sensoren $Y_a$, welche ein Hindernis detektieren, kann auf die Gefässhöhe geschlossen werden. Die Gefässhöhe wird sensorintern in das Signal $Z_{var}$ umgewandelt:

$$Z_{var} \text{ der Gefässhöhe } (Z_{var,GH}) \triangleq X*(Y_B/Y_A) \text{ (siehe Fig. 7)}$$

Wird das Signal der Gefässhöhe an die Menüauswahl weitergegeben (vor oder nach der Getränkewahl), könnten folgende Aktionen getätigt werden:

1. Verifizierung Becher passend zur Getränkegrösse

| | Menügeführte Getränkeauswahl |
|---|---|
| **Wer** | **Aktion/Anzeige** |
| GUI 16 | "Bitte stellen Sie einen Becher unter den Auslauf" |
| HS 17' | Überwacht Anwesenheit eines Bechers |
| GUI 16 | "Bitte wählen Sie ein Getränk aus" (keine Einschränkung in der Auswahl) |
| HS 17' | Misst Gefässhöhe und gibt Info an GUI |
| GUI 16 | Überprüft ob Gefässhöhe zu Getränk passt. |
| GUI 16 | "Getränk wird ausgegeben" oder "Falscher Becher zu Getränk" |

2. Auswahl Getränk anhand Bechergrösse

| | Menügeführte Getränkeauswahl eingeschränkt |
|---|---|
| **Wer** | **Aktion/Anzeige** |
| GUI 16 | "Bitte stellen Sie einen Becher unter den Auslauf" |
| HS 17' | Überwacht Anwesenheit eines Bechers |
| HS 17' | Misst Gefässhöhe und gibt Information an GUI |
| GUI 16 | Beschränkt Auswahl anhand der Gefässhöhe |
| GUI 16 | "Bitte wählen Sie ein Getränk aus" |
| GUI 16 | "Getränk wird ausgegeben" |

Die reine Höhenmessung des Gefässes 18 gemäss Fig. 7 mit den TOF-Sensoren Y kann grundsätzlich auch in einem Getränkeautomaten ohne verfahrbare Auslaufvorrichtung eingesetzt werden, um die Menüauswahl in der oben beschriebenen einen oder anderen Weise zu beeinflussen. Insbesondere kann über den Höhenverlauf der gemessenen Abstände zum Gefäss 18 eine Information über die Form des Gefässes gewonnen werden, die auch zur Abschätzung des Inhaltsvolumens herangezogen werden kann.

Im Folgenden wird jedoch erläutert, wie gemäss Fig. 8 das Gefässhöhensignal $Z_{var,GH}$ mit einer Positionsmessung für die verfahrbare Auslaufvorrichtung 12' verknüpft wird. Die Auslaufvorrichtung 1 2'soll dabei aufgrund einer aktiven Messung des Fahrweges und einem definierten Mindestabstand $\Delta h_{min}$ zu dem Gefäss 18' in Position gefahren werden.

a.) Messung Phase 1 (vor dem Start der Getränkeausgabe bzw. der Auswahl des Menüpunktes):

Aufgrund der Gesamthöhe X aller TOF-Sensoren Y (gegeben durch Baugruppenlayout) und der Anzahl Sensoren $V_B$, welche ein Hindernis detektieren (heller Sensorstrahl 23), kann auf die Gefässhöhe geschlossen werden. Die Gefässhöhe wird sensorintern in ein Signal umgewandelt:

$$Z_{var} \text{ der Gefässhöhe } (Z_{var,GH}) \triangleq X*(Y_B/Y_A)$$

b.) Messung Phase 2 (nach dem Start der Getränkeausgabe bzw. der Auswahl des Menüpunktes):

Aufgrund der Messung in Phase 1, ist die Anzahl der TOF-Sensoren Y, welche kein Hindernis detektieren, bekannt und daraus der freie Platz oberhalb des Bechers. Aus diesen Infos und einem definierten Mindestabstand Auslaufvorrichtung 12'-Gefäss 18' kann der maximale Fahrweg der Auslaufvorrichtung 12' errechnet werden.

Max. Fahrweg Auslaufvorrichtung (AV) 12': $Z_{var,AV} = Z_{var,max} - Z_{var,GH} - \Delta h_{min} \triangleq X - ((X/Y_A)*Y_B) - \Delta h_{min}$

Mit der Information $Z_{var,AV}$ ist nun klar, wie gross die Änderung von $Z_{var}$ sein darf, bis $\Delta h_{min}$ erreicht ist, denn $\Delta h_{min} \triangleq Z_{var,GH} + Z_{var,AV}$.

Somit kann die Auslaufvorrichtung 12' verfahren werden, bis $Z_{var} = Z_{var,GH} + Z_{var,Av}$ oder einfacher $Z_{var} = Z_{var,max} - \Delta h_{min}$ ist. Dann wird der Stoppbefehl an die Steuerung übermittelt und die Auslaufvorrichtung 12' stoppt.

Wird mit den TOF-Sensoren Y nicht nur detektiert, ob ein Hindernis im Weg steht, sondern die Distanz zum Hindernis gemessen, kann man auf das Aussenvolumen und/oder die Position des Gefässes auf der Standfläche schliessen. Hier gilt es zwei Fälle zu unterscheiden, je nachdem von welcher Positioniergenauigkeit des Gefässes ausgegangen werden kann.

(1)/Konstant gleiche Positionierung (das Gefäss wird z.B. mittels Positioniermarkierungen immer an einem identische, vordefinierte Ort in Auslaufbereich (auf der Standfläche 19) platziert): In diesem Fall genügt ein Array von (1 × n) Sensoren Y. Voraussetzung ist ein rundes bzw. rotationssymmetrisches oder annähernd rundes Gefäss. Aus der Höheninformation (siehe oben) und der Höhenabhängigkeit der gemessenen Distanz kann auf das Aussenvolumen des Gefässes geschlossen werden.

(2)/Positionierung mit Streuung in zwei Achsen: In diesem Fall werden drei Arrays (1 × n) Sensoren eingesetzt, die sich nebeneinander um eine gemeinsame vertikale Achse herum, vorzugsweise mit Winkelabstand 90°, befinden. Aus der Höheninformation (siehe oben) und der gemessenen Distanz kann dann auch bei nichtsymmetrischen Gefässen mit grösserer Genauigkeit auf das Aussenvolumen des Gefässes geschlossen werden.

Als geeigneter TOF-Sensor kommt beispielsweise der Sensor VL6180X von STMicroelectronics in Betracht. Dieser Sensor ermöglicht die Messung des absoluten Abstandes zu einem Objekt unabhängig von der Reflektivität des Objektes. Er misst präzise die Zeit, die ausgesendetes Licht benötigt, um zu dem nächstliegenden Objekt zu gelangen und von dort zurück zum Sensor reflektiert zu werden (Time Of Flight TOF). Dazu enthält der Sensor eine VCSEL-Infrarot-Lichtquelle und einen das reflektierte Licht empfangenden Abstandssensor. Die sehr schnelle Abstandsmessung kann dabei in einem Bereich zwischen 0 und 10 cm erfolgen. Mehrere dieser Sensoren können dann in einer linearen Anordnung auf einem gemeinsamen PCB-Streifen aufgebaut und miteinander verschaltet werden.

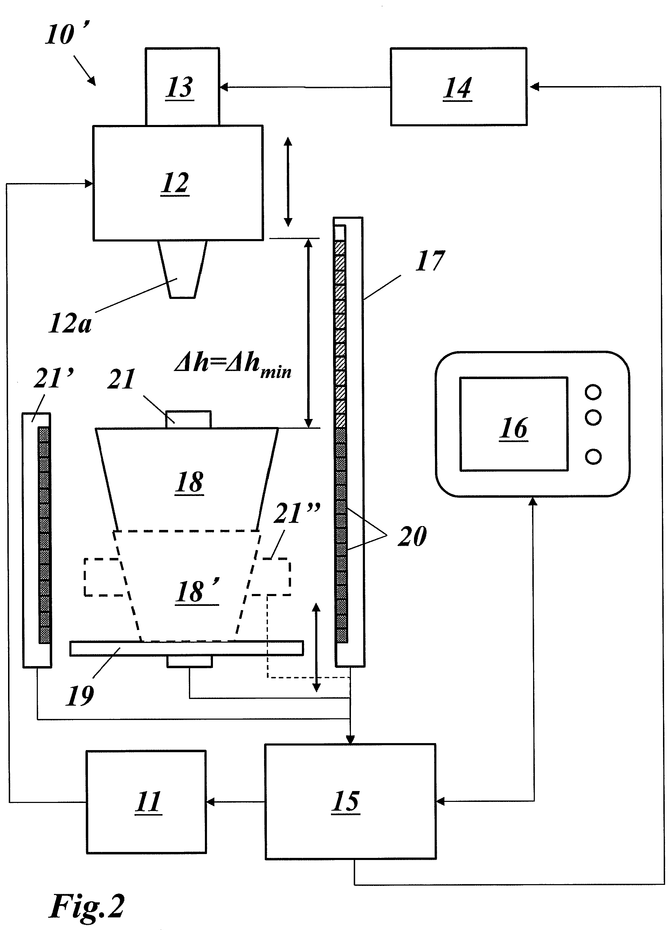

Fig. 2 zeigt ein Ausführungsbeispiel für die Variante, bei der in einem Getränkeautomaten 10' zusätzliche vertikale Formsensoren 21, 21' für die Gefässe 18, 18' vorgesehen und mit der Kontrolleinheit 15 verbunden sind, um entsprechende Messungen auszuführen. Auch eine solche Sensoranordnung kann mit Vorteil bei Getränkeautomaten eingesetzt werden, die keine verfahrbare Auslaufvorrichtung 12 aufweisen.

Werden für den Höhensensor 17, 17' TOF-Sensoren Y eingesetzt, kann durch die Auswertung des rückgestrahlten Signals auf das Material des sich im Auslaufbereich befindlichen Gefässes oder Gefässes 18, 18' geschlossen werden, da die Rückstrahlung vom Material abhängt. Dies ist insofern wichtig, um zwischen dünnwandigen (Pappbecher) und dickwandigen (Porzellan- oder Steingut-Tassen) Gefässen unterscheiden zu können. Mit dem gemessenen Aussenvolumen (siehe oben) und der Materialinformation kann das für das Getränk relevante Innenvolumen oder Inhaltsvolumen noch genauer geschätzt werden.

Bezugszeichenliste

| | |
|---|---|
| 10,10' | Getränkeautomat (insbesondere Kaffeeautomat) |
| 11 | Getränkezubereitungseinrichtung |
| 12,12' | Auslaufvorrichtung |
| 12a | Auslass |
| 13 | Antrieb (insb. Auslaufvorrichtung) |
| 14 | Auslaufsteuerung |
| 15 | Kontrolleinheit |
| 16 | Bedien- und Anzeigeeinheit |
| 17,17' | Höhensensor (vertikal) |
| 18,18' | Gefäss (Tasse, Becher etc.) |
| 19 | Standfläche |
| 20 | Sensorelement |
| 21,21' | Formsensor (vertikal) |

| 21" | Formsensor (horizontal) |
| 22 | Textanzeige |
| 23 | Sensorstrahl |
| 24 | Wand |
| hr | Tassenhöhe |
| $\Delta$h | Höhendifferenz |
| $\Delta$h$_{min}$ | Minimum der Höhendifferenz |
| Y | TOF-Sensor |
| Z$_{var}$ | variables Sensorsignal |

**Patentansprüche**

1. Getränkeautomat (10, 10'), insbesondere Kaffeeautomat, umfassend eine Getränkezubereitungseinrichtung (11), die fluidtechnisch mit einer Auslaufvorrichtung (12, 12') verbunden ist, welche oberhalb einer Standfläche (19) für ein das zubereitete Getränk auffangendes Gefäss (18, 18') angeordnet ist, sowie einen über eine Steuerung (14) steuerbaren Antrieb (13), mittels dessen Auslaufvorrichtung (12, 12') und Standfläche (19) relativ zueinander in der Höhe verfahrbar sind, **dadurch gekennzeichnet, dass** ein Höhensensor (17, 17') vorgesehen ist, welcher die Höhendifferenz ($\Delta$h) zwischen der Oberkante eines auf der Standfläche (19) abgestellten Gefässes (18, 18') und der Auslaufvorrichtung (12) misst und ein entsprechendes Signal zur Steuerung des Antriebs (13) der Auslaufvorrichtung (12, 12') und/oder der Standfläche (19) abgibt, wobei der Höhensensor ein sich in vertikaler Richtung erstreckender linearer Sensor (17, 17') ist.

2. Getränkeautomat nach Anspruch 1, **dadurch gekennzeichnet, dass** der Höhensensor (17) ein in vertikaler Richtung segmentierter Sensor ist.

3. Getränkeautomat nach Anspruch 1, **dadurch gekennzeichnet, dass** der Höhensensor (17, 17') eine Mehrzahl von in vertikaler Richtung hintereinander angeordneten einzelnen Sensorelementen (20, Y) umfasst.

4. Getränkeautomat nach Anspruch 3, **dadurch gekennzeichnet, dass** die Sensorelemente (Y) jeweils eine Bestimmung des Abstands zwischen dem Sensorelement (Y) und der Wand des Gefässes (18, 18') ermöglichen.

5. Getränkeautomat nach Anspruch 4, **dadurch gekennzeichnet, dass** die Sensorelemente Time-Of-Flight(TOF)-Sensoren (Y) sind.

6. Getränkeautomat nach Anspruch 1, **dadurch gekennzeichnet, dass** der Getränkeautomat eine zentrale Kontrolleinheit (15) aufweist, dass die Steuerung (14) mit der Kontrolleinheit (15) verbunden ist, und dass der Höhensensor (17, 17') an die Kontrolleinheit (15) angeschlossen ist.

7. Getränkeautomat nach Anspruch 6, **dadurch gekennzeichnet, dass** als graphische Benutzer-Schnittstelle (GUI) eine Bedien- und Anzeigeeinheit (16) für den Getränkeautomaten (10, 10') vorgesehen ist, und dass die Bedien- und Anzeigeeinheit (16) mit der Kontrolleinheit (15) verbunden ist.

8. Getränkeautomat nach Anspruch 7, **dadurch gekennzeichnet, dass** die Bedien- und Anzeigeeinheit (16) zur Darstellung eines Getränkemenüs aus verschiedenen auswählbaren Getränken (MP1-MP9) ausgebildet ist.

9. Getränkeautomat nach Anspruch 1, **dadurch gekennzeichnet, dass** zusätzlich zum Höhensensor (17, 17') wenigstens ein Formsensor (21, 21', 21") vorgesehen ist, welcher zum Abtasten der äusseren Form des Gefässes (18, 18') geeignet und mit einer Kontrolleinheit (15) des Getränkeautomaten (10') verbunden ist.

10. Getränkeautomat nach Anspruch 9, **dadurch gekennzeichnet, dass** der wenigstens eine Formsensor (21") als horizontaler Sensor ausgebildet ist.

11. Getränkeautomat nach Anspruch 9, **dadurch gekennzeichnet, dass** der wenigstens eine Formsensor (21, 21') aus einer Mehrzahl von in vertikaler Richtung hintereinander angeordneten Time-Of-Flight(TOF)-Sensoren zusammengesetzt ist.

12. Verfahren zum Betrieb eines Getränkeautomaten nach Anspruch 1, **dadurch gekennzeichnet, dass** vor dem Ausgeben eines Getränks mit einem Höhensensor in Form eines sich in vertikaler Richtung erstreckenden linearen Sensors (17, 17') die Höhendifferenz ($\Delta$h) zwischen der Oberkante eines auf der Standfläche (19) abgestellten Gefässes (18, 18') und der Auslaufvorrichtung (12, 12') gemessen wird, und dass die Auslaufvorrichtung (12) und das Gefäss (18, 18') relativ zueinander aufeinander zu verfahren werden, wenn die Höhendifferenz ($\Delta$h) grösser als ein vorgegebenes Minimum der Höhendifferenz ($\Delta h_{min}$) und gestoppt werden, wenn die Höhendifferenz ($\Delta$h) gleich dem vorgegebenen Minimum der Höhendifferenz ($\Delta h_{min}$) ist.

13. Verfahren nach Anspruch 12, **dadurch gekennzeichnet, dass** die Höhendifferenz ($\Delta$h) bis zum Erreichen des Minimums der Höhendifferenz ($\Delta h_{min}$) fortlaufend gemessen wird.

14. Verfahren nach Anspruch 12, +4-, **dadurch gekennzeichnet, dass** das vorgegebene Minimum der Höhendifferenz ($\Delta h_{min}$) von der Art des auszugebenden Getränks abhängt.

15. Verfahren nach Anspruch 14, **dadurch gekennzeichnet, dass** die Art des auszugebenden Getränks vom Bediener des Getränkeautomaten (10, 10') durch Auswahl eines Menüpunktes aus einer Mehrzahl von Menüpunkten (MP1-MP9) auf einer Bedien- und Anzeigeeinheit (16) festgelegt wird.

16. Verfahren nach Anspruch 15, **dadurch gekennzeichnet, dass** zusätzlich die Höhe des Gefässes (18, 18') gemessen wird, und dass Art und Anzahl der auswählbaren bzw. ausgewählten Menüpunkte durch die gemessene Höhe des Gefässes (18, 18') beeinflusst wird.

17. Verfahren nach Anspruch 16, **dadurch gekennzeichnet, dass** zusätzlich die äussere Form des Gefässes (18, 18') gemessen wird, dass aus der gemessenen Höhe und/oder der äusseren Form des Gefässes (18, 18') das Inhaltsvolumen des Gefässes (18, 18') abgeschätzt wird, und dass die in das Gefäss (18, 18') abgegebene Menge des ausgewählten Getränks sich nach dem abgeschätzten Inhaltsvolumen richtet.

**Claims**

1. Beverage dispenser (10, 10'), in particular coffee dispenser, comprising a beverage preparation device (11), which is fluidically connected to a outlet device (12, 12'), which is arranged above a standing surface (19) for a receptacle (18, 18') collecting the prepared beverage, as well as a drive (13), which is controllable by means of a control (14) and by means of which the outlet device (12, 12') and the standing surface (19) are movable in height relative to one another, **characterized in that** a height sensor (17, 17') is provided, which measures the height difference ($\Delta$h) between the upper edge of a receptacle (18, 18') placed on the standing surface (19) and the outlet device (12) and emits a corresponding signal for controlling the drive (13) of the outlet device (12, 12') and/or of the standing surface (19), wherein the height sensor is a linear sensor (17, 17') extending in the vertical direction.

2. The beverage dispenser according to claim 1, **characterized in that** the height sensor (17) is a sensor segmented in the vertical direction.

3. The beverage dispenser according to claim 1, **characterized in that** the height sensor (17, 17') comprises a plurality of individual sensor elements (20, Y) arranged in series in the vertical direction.

4. The beverage dispenser according to claim 3, **characterized in that** the sensor elements (Y) each allow a determination of the distance between the sensor element (Y) and the wall of the receptacle (18, 18').

5. The beverage dispenser according to claim 4, **characterized in that** the sensor elements are time-of-flight (TOF) sensors (Y).

6. The beverage dispenser according to claim 1, **characterized in that** the beverage dispenser comprises a central control unit (15), that the controller (14) is connected with the control unit (15), and that the height sensor (17, 17') is connected to the control unit (15).

7. The beverage dispenser according to claim 6, **characterized in that** an operating and display unit (16) for the beverage dispenser (10, 10') is provided as a graphical user interface (GUI), and **in that** the operating and display unit (16) is connected with the control unit (15).

8. The beverage dispenser according to claim 7, **characterized in that** the operating and display unit (16) is designed to display a beverage menu of various selectable beverages (MP1 -MP9).

9. The beverage dispenser according to claim 1, **characterized in that** in addition to the height sensor (17, 17') at least one shape sensor (21, 21', 21") is provided, which is suitable for scanning the outer shape of the receptacle (18, 18') and is connected with a control unit (15) of the beverage dispenser (10').

10. The beverage dispenser according to claim 9, **characterized in that** the at least one shape sensor (21") is designed as a horizontal sensor.

11. The beverage dispenser according to claim 9, **characterized in that** the at least one shape sensor (21,21') is composed of a plurality of time-of-flight(TOF) sensors arranged in series in the vertical direction.

12. A method for operating a beverage dispenser according to claim 1, **characterized in that**, before a beverage is dispensed, the height difference ($\Delta h$) between the upper edge of a receptable (18, 18') placed on the standing surface (19) and the outlet device (12, 12') is measured with a height sensor in the form of a linear sensor (17, 17') extending in the vertical direction, and **in that** the outlet device (12) and the receptable (18, 18') are moved relative to one another towards one another when the height difference ($\Delta h$) is greater than a predetermined minimum of the height difference ($\Delta h_{min}$) and are stopped when the height difference ($\Delta h$) is equal to the predetermined minimum of the height difference ($\Delta h_{min}$).

13. The method according to claim 12, **characterized in that** the height difference ($\Delta h$) is measured continuously until the minimum of the height difference ($\Delta h_{min}$) is reached.

14. The method according to claim 12, **characterized in that** the predetermined minimum of the height difference ($\Delta h_{min}$) depends on the type of beverage to be dispensed.

15. The method according to claim 14, **characterized in that** the type of beverage to be dispensed is determined by the user of the beverage dispenser (10, 10') by selecting a menu item from a plurality of menu items (MP1-MP9) on an operating and display unit (16).

16. The method according to claim 15, **characterized in that** the height of the receptable (18, 18') is additionally measured, and that the type and number of menu items selectable or selected is influenced by the measured height of the receptable (18, 18').

17. The method according to claim 16, **characterized in that** additionally the outer shape of the receptable (18, 18') is measured, that from the measured height and/or the outer shape of the receptable (18, 18') the content volume of the receptable (18, 18') is estimated, and that the amount of the selected beverage dispensed into the receptable (18, 18') is governed by the estimated content volume.

## Revendications

1. Distributeur automatique de boissons (10, 10'), en particulier distributeur automatique de café, comprenant un dispositif de préparation de boissons (11) relié fluidiquement à un dispositif de sortie (12, 12') qui est disposé au-dessus d'une surface de support (19) pour un récipient (18, 18') recevant la boisson préparée, ainsi qu'un entraînement (13) pouvant être commandé par une commande (14), au moyen duquel le dispositif de sortie (12, 12') et la surface de support (19) peuvent être déplacés en hauteur l'un par rapport à l'autre, **caractérisé en ce qu'**un capteur de hauteur (17, 17') est prévu, lequel mesure la différence de hauteur ($\Delta h$) entre le bord supérieur d'un récipient (18, 18') posé sur la surface de support (19) et le dispositif de sortie (12) et émet un signal correspondant pour la commande de l'entraînement (13) du dispositif de sortie (12, 12') et/ou de la surface de support (19), le capteur de hauteur étant un capteur linéaire (17, 17') s'étendant dans le sens vertical.

2. Distributeur automatique de boissons selon la revendication 1, **caractérisé en ce que** le capteur de hauteur (17) est un capteur segmenté dans le sens vertical.

3. Distributeur automatique de boissons selon la revendication 1, **caractérisé en ce que** le capteur de hauteur (17, 17') comprend une pluralité d'éléments de capteur (20, Y) individuels disposés les uns derrière les autres dans le sens vertical.

4. Distributeur automatique de boissons selon la revendication 3, **caractérisé en ce que** les éléments de capteur (Y) permettent respectivement une détermination de la distance entre l'élément de capteur (Y) et la paroi du récipient (18, 18').

5. Distributeur automatique de boissons selon la revendication 4, **caractérisé en ce que** les éléments de capteur sont des capteurs (Y) à temps de vol (TOF).

6. Distributeur automatique de boissons selon la revendication 1, **caractérisé en ce que** le distributeur automatique de boissons présente une unité de contrôle (15) centrale, **en ce que** la commande (14) est connectée à l'unité de contrôle (15), et **en ce que** le capteur de hauteur (17, 17') est relié à l'unité de contrôle (15).

7. Distributeur automatique de boissons selon la revendication 6, **caractérisé en ce qu'**une unité de manipulation et d'affichage (16) est prévue pour le distributeur automatique de boissons (10, 10') comme interface utilisateur graphique (GUI), et **en ce que** l'unité de manipulation et d'affichage (16) est connectée à l'unité de contrôle (15).

8. Distributeur automatique de boissons selon la revendication 7, **caractérisé en ce que** l'unité de manipulation et d'affichage (16) est configurée pour représenter un menu de boissons constitué de différentes boissons (MP1-MP9) pouvant être sélectionnées.

9. Distributeur automatique de boissons selon la revendication 1, **caractérisé en ce que**, en plus du capteur de hauteur (17, 17'), au moins un capteur de forme (21, 21', 21") est prévu, lequel capteur de forme est adapté pour palper la forme extérieure du récipient (18, 18') et est connecté à une unité de contrôle (15) du distributeur automatique de boissons (10').

10. Distributeur automatique de boissons selon la revendication 9, **caractérisé en ce que** l'au moins un capteur de forme (21") est réalisé sous la forme d'un capteur horizontal.

11. Distributeur automatique de boissons selon la revendication 9, **caractérisé en ce que** l'au moins un capteur de forme (21, 21') est constitué d'une pluralité de capteurs à temps de vol (TOF) disposés les uns derrière les autres dans le sens vertical.

12. Procédé permettant de faire fonctionner un distributeur automatique de boissons selon la revendication 1, **caractérisé en ce que**, avant la distribution d'une boisson, la différence de hauteur ($\Delta h$) entre le bord supérieur d'un récipient (18, 18') posé sur la surface de support (19) et le dispositif de sortie (12, 12') est mesurée à l'aide d'un capteur de hauteur sous la forme d'un capteur linéaire (17, 17') s'étendant dans le sens vertical, et **en ce que** le dispositif de sortie (12) et le récipient (18, 18') sont à déplacer l'un au-dessus de l'autre l'un par rapport à l'autre lorsque la différence de hauteur ($\Delta h$) est supérieure à un minimum prédéfini de la différence de hauteur ($\Delta h_{min}$) et sont arrêtés lorsque la différence de hauteur ($\Delta h$) est égale au minimum prédéfini de la différence de hauteur ($\Delta h_{min}$).

13. Procédé selon la revendication 12, **caractérisé en ce que** la différence de hauteur ($\Delta h$) est mesurée en continu jusqu'à l'atteinte du minimum de la différence de hauteur ($\Delta h_{min}$).

14. Procédé selon la revendication 12, **caractérisé en ce que** le minimum prédéfini de la différence de hauteur ($\Delta h_{min}$) dépend du type de boisson à distribuer.

15. Procédé selon la revendication 14, **caractérisé en ce que** le type de boisson à distribuer est déterminé par l'utilisateur du distributeur automatique de boissons (10, 10') en sélectionnant un élément de menu parmi une pluralité d'éléments de menu (MP1-MP9) sur une unité de manipulation et d'affichage (16).

16. Procédé selon la revendication 15, **caractérisé en ce que** la hauteur du récipient (18, 18') est en outre mesurée, et **en ce que** le type et le nombre d'éléments de menu sélectionnés ou pouvant être sélectionnés sont influencés par la hauteur mesurée du récipient (18, 18').

17. Procédé selon la revendication 16, **caractérisé en ce que** la forme extérieure du récipient (18, 18') est en outre mesurée, **en ce que** le volume de contenu du récipient (18, 18') est estimé à partir de la hauteur mesurée et/ou de la forme extérieure du récipient (18, 18'), et **en ce que** la quantité de la boisson choisie distribuée dans le récipient (18, 18') est ajustée en fonction du volume de contenu estimé.

*Fig.1*

**Fig.2**

$\Delta h = \Delta h_{min}$

S1 — Tasse unter Auslauf stellen

S2 — Tassenhöhe wird bestimmt

S3 — Menüauswahl wird angezeigt

S4 — Bediener wählt Getränk aus

S5 — Auslaufsteuerung wird aktiviert

S6 — Sensor misst $\Delta h$

S7 — Auslauf stoppt bei $\Delta h = \Delta h_{min}$

S8 — Tasse wird nach Menü gefüllt

Fig.3

S1 — Tasse unter Auslauf stellen

S2 — Tassenhöhe wird bestimmt

S3 — Menüauswahl wird angezeigt

S4 — Bediener wählt Getränk aus

Getränk Passt zu Becher — Nein → Anzeige

Ja

S5 — Auslaufsteuerung wird aktiviert

*Fig.4*

16

MP1  MP2  MP3

MP4  MP5  MP6

MP7  MP8  MP9

22

**Fig.5**

16

MP1  MP2  MP3

MP4  MP5  MP6

MP7  MP8  MP9

**Fig.6**

**Fig.7**

*Fig.8*

**EP 3 275 348 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4883100 A
- DE 2048163 A1
- US 6100518 A
- US 6082246 A
- DE 102004050365 A1
- DE 102008029835 A1
- EP 1745726 A1
- EP 2599414 B1
- EP 2454977 B1
- EP 2716189 B1
- JP H03114799 U
- WO 2004023949 A
- JP 2003095393 A
- EP 2478805 A2